# EUROPÄISCHE PATENTSCHRIFT

(11) **EP 2 134 938 B1**
(45) Veröffentlichungstag und Bekanntmachung des Hinweises auf die Patenterteilung: **27.10.2010**
(21) Anmeldenummer: 08734652.4
(22) Anmeldetag: 18.03.2008
(51) Int. Cl.: F01N 3/021, F01N 3/28

(54) **KATALYSATOR FÜR EIN ABGASNACHBEHANDLUNGSSYSTEM FÜR VERBRENNUNGSMOTOREN**
CATALYST FOR AN EXHAUST GAS AFTERTREATMENT SYSTEM FOR INTERNAL COMBUSTION ENGINES
CATALYSEUR POUR UN SYSTÈME DE POST-TRAITEMENT DE GAZ D'ÉCHAPPEMENT POUR DES MOTEURS À COMBUSTION INTERNE

(30) Priorität: 22.03.2007 DE 102007013797
(43) Veröffentlichungstag der Anmeldung: 23.12.2009
(73) Patentinhaber: Alantum Corporation, Gyonggi-do 462-120 (KR)
(72) Erfinder: GOEVERT, Michael, 40789 Monheim (DE); EBENER, Stefan, Sales & Marketing Team, Seongnam-city, Gyonggi-do (KR); SCHEERER, Thomas, 85368 Moosburg a.d. Isar (DE); KRUSENBAUM, Thomas, 85139 Wettstetten (DE)
(74) Vertreter: Stolmár, Matthias
(86) Internationale Anmeldenummer: PCT/EP2008/002169
(87) Internationale Veröffentlichungsnummer: WO 2008/113561

(56) Entgegenhaltungen:
- EP-A- 0 511 415
- EP-A- 1 348 839

## Beschreibung

Die vorliegende Erfindung betrifft eine Vorrichtung zur katalytischen Behandlung von Abgasen von Kraftfahrzeugen sowie ein Verfahren zur Herstellung der erfindungsgemäßen Vorrichtung und deren Verwendung sowie ein Verfahren zur Reinigung von Abgasen aus Kraftfahrzeugen.

Ein Fahrzeugkatalysator besteht üblicherweise aus mehreren Komponenten. Als Träger dient typischerweise ein temperaturstabiler Wabenkörper aus einer Keramik oder einem Metall, in der Regel ein so genannter Monolith, der von einer Vielzahl dünnwandiger Kanäle durchzogen ist. Auf dem Träger befindet sich der so genannte Washcoat. Er besteht aus einem porösen Material, meistens Aluminiumoxid (Al₂O₃), um eine möglichst große Katalysatoroberfläche bereitzustellen. In dem Washcoat sind die katalytisch aktiven Edelmetalle eingelagert. Oftmals wird als "Washcoat" auch die wässrige Aufschlämmung der Beschichtungszusammensetzung bezeichnet. Bei den heutzutage eingesetzten Abgaskatalysatoren sind dies meistens die Edelmetalle Platin, Rhodium und Palladium. Der keramische Träger ist gewöhnlich mit Hilfe spezieller Matten in einem metallischen Gehäuse, dem so genannten Canning, gelagert. Das Canning ist fest im Abgasstrang des Fahrzeugs verbaut und besitzt zum Teil weitere Anschlussmöglichkeiten, beispielsweise für Lambda-Sonnen oder Thermoelemente.

Die Aufgabe von Fahrzeugkatalysatoren besteht in der chemischen Umsetzung der Verbrennungsschadstoffe Kohlenwasserstoffe, Kohlenmonoxid (CO) und Stickoxide (NOₓ) zu Kohlendioxid (CO₂), Wasser (H₂O) und Stickstoff (N₂) durch Oxidation oder Reduktion. Je nach Aufgabe gibt es unterschiedliche Arten von Katalysatoren. Bei einem Dreiwegekatalysator finden die Oxidation von CO und Kohlenwasserstoffen sowie die Reduktion von NOₓ parallel zueinander statt. Der Dreiwegekatalysator kann nur bei Fahrzeugen mit Otto-Motor und Lambda-Regelung eingesetzt werden. Bei einem Dieselmotor verhindert der Sauerstoffüberschuss im Abgas die Reduktion des NOₓ und macht daher spezielle Katalysatoren erforderlich.

Um in Dieselmotoren den Gehalt an NOₓ im Abgas zu verringern, können zum einen innermotorische Maßnahmen vorgesehen werden, durch die die Verbrennung gezielt beeinflusst wird. Nachteil bei diesen Maßnahmen sind jedoch eine erhöhte Russ-Emission und ein Sinken der Motorleistung. Aufgrund von deutlich niedrigeren Abgastemperaturen im Vergleich zum Otto-Motor sind Katalysatoren bei Dieselmotoren oft nahe am Abgaskrümmer verbaut. Ziel der Katalysatoren bei Dieselmotoren ist nicht nur die NOₓ-Minimierung, sondern auch die Oxidation der Russpartikel, um die Feinstaubemission zu verringern. Bei dieser Art der Katalysatoren handelt es sich um die bekannten DieselOxidationskatalysatoren. Diese Katalysatoren sind gewöhnlich mit einem Washcoat ausgestattet, der nur Platin und/oder Palladium enthält.

Ein weiterer Typ Katalysator ist der NOₓ-Speicherkatalysator. Da moderne Motoren mit einem Sauerstoffüberschuss zur Erhöhung des Motorwirkungsgrades arbeiten, können herkömmliche Katalysatoren nicht eingesetzt werden. Die Oxidation von CO und Kohlenwasserstoffen geht analog zum herkömmlichen Dreiwegekatalysator vonstatten, jedoch müssen Stickoxide zwischengespeichert werden. Deren katalytische Reduktion gelingt intermittierend mit einem fetten Abgasgemisch. Ist die Aufnahmekapazität des Katalysators mit Stickoxiden erschöpft, wird kurzzeitig ein fettes, d.h. reduzierendes Abgasgemisch eingestellt, so dass die im Katalysator zwischengespeicherten Stickoxide zu Stickstoff reduziert werden. Damit wird der Katalysator für den nächsten Speicherzyklus vorbereitet.

Ein weiteres mittlerweile marktreifes Verfahren zur Reduktion der Stickoxide ist die so genannte Selektive Katalytische Reduktion. Hierbei wird kontinuierlich eine wässrige Harnstofflösung, z.B. mittels einer Dosierpumpe, in den Abgasstrom eingespritzt. Dabei entsteht durch Hydrolyse Wasser und Ammoniak, wobei der Ammoniak in der Lage ist, die Stickoxide im Abgas zu Stickstoff zu reduzieren.

Bei allen bekannten Katalysatortypen ist die Einbettung, d.h. Anordnung der Katalysatorsubstrate mit fertigungstechnischen Problemen verbunden. Bisher wurde die Anordnung in einem Gehäuse so vorgenommen, dass das Katalysatorsubstrat unter Zwischenschaltung elastischer Zwischenlagen in einem zylindrischen Gehäuse festgespannt wurde. Das Katalysatorsubstrat und das Gehäuse müssen im Betrieb Temperaturdifferenzen von über 1000 °C, die mit einer thermisch induzierten Ausdehnung verbunden ist, ohne Schädigungen aushalten. Dadurch wird die Lebensdauer des Katalysators verkürzt. Darüber hinaus ist die Fertigung eines Katalysators, bei dem ein Katalysatorsubstrat mit elastischen Zwischenlagen in einem zylindrischen Katalysatorgehäuse angeordnet ist, sehr aufwändig.

Die DE 15 94 716 A1 offenbart eine Anordnung zur katalytischen Nachverbrennung von Kraftfahrzeugabgasen, bei der ein Trägerkatalysator in Kombination mit einem keramischen Material angeordnet ist, wobei als Trägerkatalysator Metallfasermaterial und keramisches Material schichtweise angeordnet sind und auf dem Faserwerkstoff der Katalysator angeordnet ist. Das keramische Material ist dabei zwischen die Metallfaserfliese eingebettet und kann so vom Abgas durchströmt werden.

Die WO 2006/007956 A1 offenbart eine Abgasreinigungsvorrichtung für Kraftfahrzeuge mit einem in einem Gehäuse gelagerten Monolithen, der sich quer zur Mittellängsachse des Gehäuses und einem zwischen dem Monolithen und einem diesen umfassenden Gehäuseabschnitt vorhandenen Spaltraum erstreckt.

Im Spaltraum befinden sich Halteelemente mit denen der Monolith zumindest mit der Stirnseite am Gehäuse fixiert sein kann, welche sich radial nach innen strecken und an der Stirnseite des Monolithen teilweise überlappen. Dadurch können an die im Spaltraum notwendigen Lagermatten geringere Anforderungen hinsichtlich der von der Lagermatte ausgeübten Haltekräfte gestellt werden, so dass nur zur thermischen Isolierung des Gehäuses dienende Matten eingesetzt werden können.

Die DE 34 30 398 A1 offenbart eine katalytische Abgasreinigungsvorrichtung, bei der ein Hüllrohr verwendet wird, das an seinem mit dem Gehäuse zu verschweißenden Stirnende über die Stirnfläche der Trägermatrix in axialer Richtung vorragt, und wobei das Hüllrohr, ein Einlaufteil für das zu reinigende Abgas und der Mantel des Gehäuses über eine gemeinsame in Umfangsrichtung verlaufende Schweißnaht miteinander verbunden sind und das Hüllrohr schwimmend gelagert ist. Bei weiteren bekannten Vorrichtungen ist ein Katalysatorsubstrat axial in einem zylindrischen Gehäuse angeordnet (siehe DE 34 30 398 A1, DE 31 07 620 A1, DE 195 02 844 A1 oder DE 195 09 029 A1). Problem diesen Vorrichtungen ist die aufwändige, viele Arbeitsschritte umfassende Fertigung. Ferner ist das Katalysatorsubstrat gemäß den Lehren dieser Druckschriften nicht optimal gegen mechanische und thermische Beanspruchung geschützt. Der Erfindung lag daher die Aufgabe zugrunde, einen Katalysator herzustellen, bei dem das Katalysatorsubstrat gegen thermische und mechanische Beanspruchung sicher in einem Gehäuse angeordnet ist. Ferner soll der Katalysator kostengünstig und in wenigen Arbeitsschritten hergestellt werden können.

Gelöst wird die Aufgabe durch eine Vorrichtung zur katalytischen Behandlung von Abgasen von Kraftfahrzeugen, die ein als Hohlzylinder ausgestaltetes Katalysatorsubstrat, ein einlassseitiges und ein auslassseitiges Gasleitblech sowie eine Außenwand umfasst, wobei die Gasleitbleche das Katalysatorsubstrat einfassen und das auslassseitige Gasleitblech und das Katalysatorsubstrat einen ersten Hohlraum bilden, in den ein Abgasstrom eingeleitet werden kann, der durch das Katalysatorsubstrat hindurchtritt und in einen zweiten Hohlraum gelangt, der von Außenwand, Gasleitblechen und Katalysatorsubstrat umschlossen wird, wobei das auslassseitige Gasleitblech über Gasaustrittsöffnungen verfügt, und wobei der für die Gasaustrittsöffnungen ausgesparte Teil des auslassseitigen Gasleitbleches gebördelt ist, so dass das Katalysatorsubstrat fixiert wird.

Der Vorteil dieser Vorrichtung gegenüber den aus dem Stand der Technik bekannten liegt insbesondere in einer vereinfachten, d.h. weniger Schritte umfassenden Fertigung des Katalysators. Das Katalysatorsubstrat ist in dem Katalysatorgehäuse derart gelagert, dass Brüche durch thermische oder mechanische Belastung wirksam vermieden werden.

Unter dem Begriff "Bördeln" soll im Rahmen dieser Erfindung ein rechtwinkliges Aufbiegen des Randes von Blechen verstanden werden. Handwerklich wird noch nach der Art der Umformung unterschieden: Wird das Blech bei der Umformung gestaucht, spricht man von bördeln, wird das Blech gedehnt, spricht der Fachmann auch vom Arbeitsgang des Schweifens. Im Rahmen dieser Erfindung soll sowohl das Stauchen als auch das Dehnen des Bleches allgemein unter bördeln verstanden werden.

Unter dem ausgesparten Teil des auslassseitigen Gasleitbleches wird folgendes verstanden: Um eine Gasaustrittsöffnung in das auslassseitige Gasleitblech zu schaffen, werden Schnitte in das Blech gesetzt. Der Teil des Bleches, der gebördelt wird, wird im Rahmen der Anmeldung als ausgesparter Teil bezeichnet. Stellt der Schnitt beispielsweise den halben Umfang eines Kreises dar, ist der gebildete Halbkreis der ausgesparte Teil, der gebördelt wird.

Der ausgesparte Teil liegt nach dem Bördeln formschlüssig an der Zylinderwand des Katalysatorsubstrates an. Somit wird das Katalysatorsubstrat unter Zuhilfenahme einfacher Fertigungsschritte fixiert, d.h. im Inneren des von der Außenwand und den Gasleitblechen gebildeten Körpers gehalten.

Mit Hilfe dieser Vorrichtung kann ein Abgasstrom behandelt werden, der durch das einlassseitige Gasleitblech in den ersten Hohlraum der Vorrichtung geleitet wird, von dort durch das Katalysatorsubstrat hindurchtritt, in den zweiten Hohlraum der Vorrichtung geleitet wird und durch die Gasaustrittsöffnungen aus der Vorrichtung gereinigt herausgeführt wird.

Das Behandeln des Abgasstroms kann gegebenenfalls auch in umgekehrter Strömungsrichtung durchgeführt werden. Bei einem solchen Behandlungsverfahren wird der Gasstrom durch die auslassseitigen Gasaustrittsöffnungen in den zweiten Hohlraum geleitet, der Gasstrom tritt durch das Katalysatorsubstrat hindurch und gelangt in den ersten Hohlraum der Vorrichtung und wird durch das einlassseitige Gasleitblech aus der Vorrichtung herausgeführt. Erfindungsgemäß ist die beanspruchte Vorrichtung daher so gestaltet, dass der Abgasstrom zunächst in den zweiten Hohlraum der Vorrichtung und danach durch den ersten Hohlraum der Vorrichtung geführt wird.

Die Vorrichtung stellt somit einen Katalysator bereit, der für jeden der oben ausführlich beschriebenen Katalysatortypen verwendet werden kann. Erfindungsgemäß findet die Vorrichtung somit Verwendung für einen Dreiwegekatalysator, einen Dieseloxidationskatalysator, einen NOₓ-Speicherkatalysator oder für einen Katalysator für die Selektive Katalytische Reduktion (SCR-Katalysator).

In einer bevorzugten Ausführungsform ist das Katalysatorsubstrat eingefasst, indem das einlassseitige Gasleitblech gefalzt ist, so dass eine Führung in dem einlassseitigen Gasleitblech vorhanden ist, in der das Katalysatorsubstrat formschlüssig eingepasst ist.

Unter einem Falz wird im Rahmen dieser Erfindung eine Falte in einem Gasleitblech verstanden, in die ein Rand oder Vorsprung des anderen Teils eingreifen kann. In der oben beschriebenen bevorzugten Ausführungsform ist das einlassseitige Gasleitblech so gefalzt, dass in der Draufsicht auf das Gasleitblech eine Vertiefung entsteht, in die das Katalysatorsubstrat formschlüssig eingepasst ist. Wahlweise kann das Gasleitblech auch nur einfach gefalzt sein, so dass entweder die Innenseite oder die Außenseite des Katalysatorsubstrates an den Falz formschlüssig anstößt.

In einer weiteren bevorzugten Ausführungsform ist das Katalysatorsubstrat eingefasst, indem das auslassseitige Gasleitblech gefalzt ist, so dass die Innenseite des als Hohlzylinder ausgestalteten Katalysatorsubstrates formschlüssig an einem Falz des auslassseitigen Gasleitbleches anliegt.

Bei den beschriebenen Ausführungsformen wird die Katalysatorsubstrataufnahme durch Formgebung der Gasleitbleche realisiert. Der Vorteil dieser Ausführungsformen liegt in einem sichereren Passsitz des Katalysatorsubstrates in der Vorrichtung. Insbesondere bei Dieseloxidationskatalysatoren zur Entfernung von Rußpartikeln ist ein formschlüssiges Anliegen des Katalysatorsubstrates essentiell wichtig, damit ein Vorbeiströmen des Abgases an dem Katalysatorsubstrat verhindert wird. Eine Abdichtung ist bei diesen Ausführungsformen leichter zu realisieren.

In einer bevorzugten Ausführungsform stellt das Katalysatorsubstrat einen Wabenkörper dar, der aus einem metallischen oder einem keramischen Material besteht und mit einem Washcoat versehen ist, in dem die katalytisch wirksamen Stoffe eingebettet sind.

Im Stand der Technik sind die unterschiedlichsten Katalysatorsubstrate offenbart. Es gibt keramische Materialien, die durch ein Sinterverfahren hergestellt werden und eine schwammartige Gerüststruktur darstellen. Metallische Substrate werden hergestellt, indem die Substrate gewickelt werden. Solche Herstellungsverfahren sind bekannt. Falls gewickelte Substrate als Katalysatorsubstrate verwendet werden, können die Substrate mit zwei oder mehr Beschichtungsmaterialien versehen werden. Die Beschichtungen bestehen aus katalytisch wirksamen Materialien, die unterschiedliche Porösitäten aufweisen, d.h. bei denen Löcher in den katalytisch aktiven Beschichtungsmaterialien eine bi- oder multimodale Größenverteilung zeigen. Der Vorteil dieser Ausführungsform besteht darin, dass durch ein und dasselbe Katalysatorsubstrat mehrere Funktionen erfüllt werden können, beispielsweise unterschiedliche Reaktionen mit dem Katalysatorsubstrat katalysiert werden können.

Gemäß einer weiteren bevorzugten Ausführungsform ist bei der erfindungsgemäßen Vorrichtung zwischen den Gasleitblechen und dem Katalysatorsubstrat jeweils eine Trägerdichtung angeordnet, die bevorzugt aus einem Drahtgewebe besteht. Dieses Drahtgewebe muss den hohen Temperaturen in einem Katalysator standhalten. Daher besteht das Drahtgewebe aus einem Material wie rostfreiem Stahl oder anderen metallischen oder nichtmetallischen Materialien mit hoher Widerstandsfähigkeit gegenüber Korrosion bei hohen Temperaturen.

Allgemein muss dafür Sorge getragen werden, dass das Abgas insbesondere bei Dieseloxidationskatalysatoren tatsächlich lediglich das mit dem katalytischen Material bzw. dem Washcoat beschichtete Substrat durchströmt und nicht außen an einem derartigen Substrat vorbeiströmt. Dieses Vorbeiströmen des Abgases ist in der Technik ein bekanntes Problem und wird als sogenannter Bypass-Effekt bezeichnet. Mit Hilfe der Trägerdichtungen wird gewährleistet, dass das Abgas tatsächlich das Katalysatorsubstrat durchströmt.

In einer weiteren bevorzugten Ausführungsform besteht die Trägerdichtung aus einem elastischen Material. Durch eine solche federnde Aufnahme des Katalysatorsubstrates können mechanische Beanspruchungen gedämpft werden, wodurch die Lebensdauer des Katalysators erhöht wird.

Im Fall der Trägerdichtung aus einem elastischen Material wird das Katalysatormaterial durch einen Presssitz in der Halterung eingefasst. Bei dieser Ausführungsform wird der Bypass-Effekt vollständig verhindert. Gleichzeitig wird bei starker Wärmeausdehnung des Katalysatorsubstrates eine geringere Kraft auf die Halterung ausgeübt, so dass durch Wärmeausdehnung entstehende Spannungen abgefedert werden. Auch Erschütterungen beim Betrieb des Kraftfahrzeugs werden abgefedert und nicht auf das Katalysatorsubstrat übertragen.

Die Erfindung umfasst ferner ein Verfahren zur Herstellung einer erfindungsgemäßen Vorrichtung, indem das Katalysatorsubstrat zwischen dem einlassseitigen und dem auslassseitigen Gasleitblech formschlüssig angeordnet wird, die Gasleitbleche mit der Außenwand verbunden werden, Gasaustrittsöffnungen in das auslassseitige Gasleitblech eingelassen werden, wobei ein übrigbleibender Teil des auslassseitigen Gasleitbleches gebördelt wird, um das Katalysatorsubstrat zu fixieren. Der ausgesparte Teil des auslassseitigen Gasleitbleches dient einmal zur Fixierung des Katalysatorsubstrates und macht nebenher den Weg frei für den Gasaustritt aus dem Katalysator.

Bei einer erfindungsgemäßen Ausführungsform werden die Gasleitbleche und die Außenwand verbunden, indem Gasleitbleche mit der Außenwand verschweißt werden. Hierbei handelt es sich um das fertigungstechnisch einfachste Verfahren, die metallischen Komponenten zu verbinden.

Bei einer weiteren erfindungsgemäßen Ausführungsform werden die Gaseintrittsöffnungen in das auslassseitige Gasleitblech eingelassen, indem jede Gaseintrittsöffnung durch einen halbkreisförmigen Schnitt in das auslassseitige Gasleitblech gesetzt wird, wobei anschließend der entstandener Halbkreis gebördelt wird, um das Katalysatorsubstrat zu fixieren. Bei diesem Verfahren wird das Katalysatorsubstrat unter Verwendung sehr weniger Arbeitsschritte in dem Katalysatorgehäuse arretiert.

Erfindungsgemäß können alle technisch bekannten Verfahren verwendet werden, den Schnitt in das auslassseitige Gasleitblech zu setzen. Besonders bevorzugt geschieht dies unter Verwendung einer Stanze, einer Fräse oder einer Säge.

In einer weiteren bevorzugten Ausführungsform werden vor dem Anordnen des Katalysatorsubstrates zwischen den Gasleitblechen, die Trägerdichtungen zwischen Katalysatorsubstrat und Gasleitblechen angeordnet.

Nachfolgend wird ein Ausführungsbeispiel der vorliegenden Erfindung anhand der beiliegenden Zeichnungen näher erläutert ohne dass dies als beschränkend verstanden werden soll.

Dabei zeigen:
- Fig. 1: eine schematische Darstellung einer Ausführungsform der erfindungsgemäßen Vorrichtung mit einem Katalysatorsub- strat in einem Katalysatorgehäuse,
- Fig. 2: die Draufsicht auf ein auslassseitiges Gasleitblech.

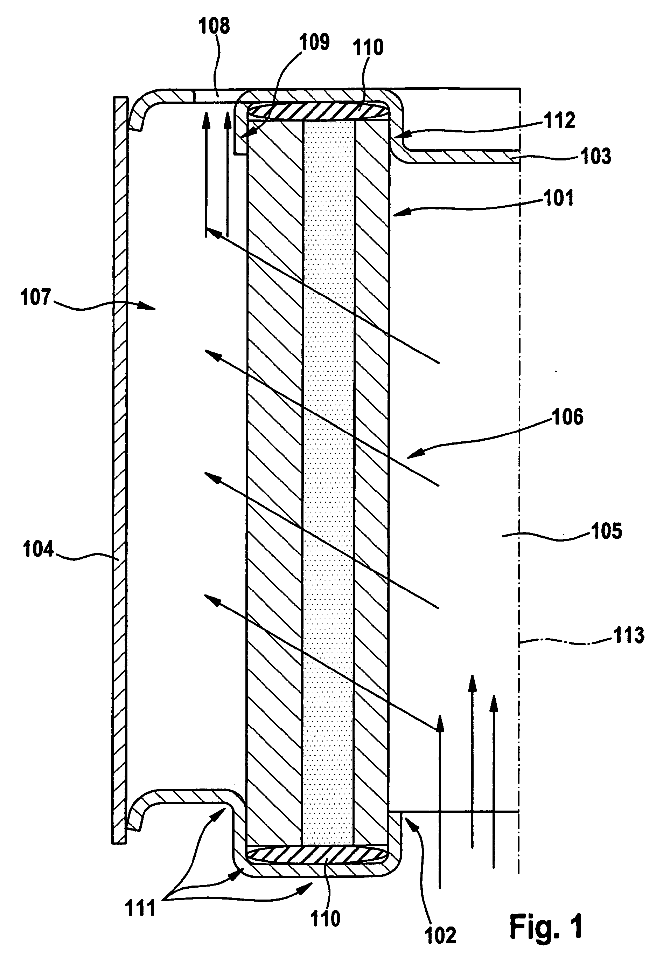

Figur 1 zeigt der Einfachheit halber nur einen Schnitt durch eine geteilte Vorrichtung. Der Betrachter muss sich die Vorrichtung 100 rotationssymmetrisch zur Achse 113 vorstellen. Zwischen einlassseitigem Gasleitblech 102 und auslassseitigem Gasleitblech 103 ist das Katalysatorsubstrat 101 angeordnet. Ein Abgasstrom 106, dargestellt durch Pfeile, tritt einlassseitig in den ersten Hohlraum 105 ein, durchtritt das Katalysatorsubstrat 101 und strömt in den zweiten Hohlraum 107. Von dort wird der Abgasstrom 106 durch die Gasaustrittsöffnung 108 geleitet, die sich in dem Gasleitblech 103 befindet. Diese Gasaustrittsöffnungen werden in das Blech eingearbeitet, indem dieses teilweise eingeschnitten wird und der ausgesparte Teil 109 gebördelt wird, so dass das Katalysatorsubstrat 101 fixiert wird. Die Gasleitbleche 102 und 103 sowie die Außenwand 104 bilden das Katalysatorgehäuse. Figur 1 zeigt eine Ausführungsform, in der das Katalysatorsubstrat 101 in einer Führungsschiene 111 dargestellt ist, die in das Blech eingefalzt ist. Ferner zeigt Figur 1 die Trägerdichtungen 110.

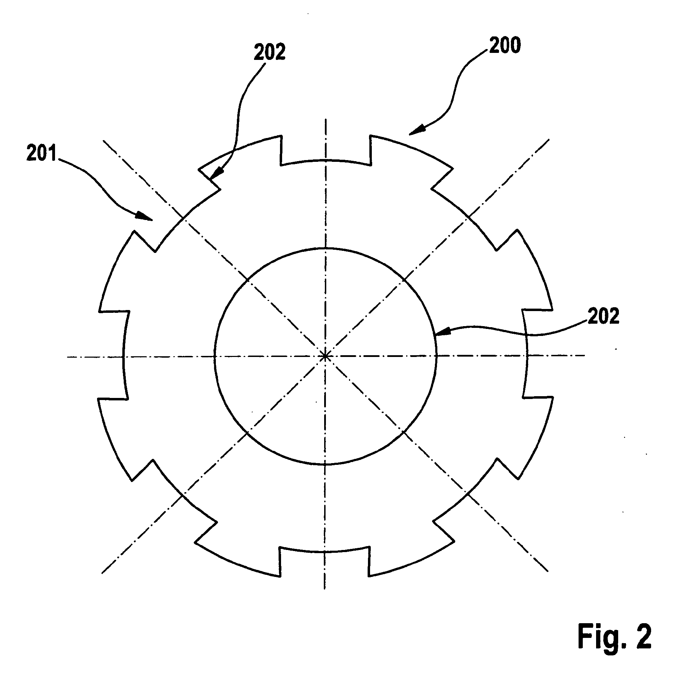

Figur 2 zeigt die Draufsicht auf ein auslassseitiges Gasleitblech 200 mit Gasaustrittsöffnungen 201. Bei diesem Beispiel wurden die Gasaustrittsöffnungen 201 hergestellt, indem das Gasleitblech 200 eingeschnitten wird, so dass die Schnittkanten 202 entstehen. Das übrigbleibende Material, dass bei der Draufsicht nicht gezeigt werden kann, wird gebördelt und bildet den ausgesparten Teil, der in Figur 1 mit dem Bezugszeichen 109 versehen ist.

## Patentansprüche

1. Vorrichtung zur katalytischen Behandlung von Abgasen von Kraftfahrzeugen umfassend ein als Hohlzylinder ausgestaltetes Katalysatorsubstrat (101), ein einlassseitiges (102) und ein auslassseitiges Gasleitblech (103) sowie eine Außenwand (104), wobei die Gasleitbleche (102, 103) das Katalysatorsubstrat (101) einfassen und das auslassseitige Gasleitblech (103) und das Katalysatorsubstrat (101) einen ersten Hohlraum (105) bilden, in den ein Abgasstrom (106) eingeleitet werden kann, der durch das Katalysatorsubstrat (101) hindurchtritt und in einen zweiten Hohlraum (107) gelangt, der von Außenwand (104), Gasleitblechen (102, 103) und Katalysatorsubstrat (101) umschlossen wird, wobei das auslassseitige Gasleitblech (103) über Gasaustrittsöffnungen (108) verfügt, und wobei der ausgesparte Teil (109) des auslassseitigen Gasleitbleches (103) gebördelt ist, so dass das Katalysatorsubstrat (101) fixiert wird.

2. Vorrichtung nach Anspruch 1, bei der das Katalysatorsubstrat (101) eingefasst ist, indem das einlassseitige Gasleitblech (102) gefalzt ist, so dass eine Führung (111) in dem einlassseitigen Gasleitblech (102) vorhanden ist, in der das Katalysatorsubstrat (101) formschlüssig eingepasst ist.

3. Vorrichtung nach Anspruch 1 oder 2, bei der das Katalysatorsubstrat (101) eingefasst ist, indem das auslassseitige Gasleitblech (103) gefalzt ist, so dass die Innenseite des als Hohlzylinder ausgestalteten Katalysatorsubstrates (101) formschlüssig an einem Falz (112) des auslassseitigen Gasleitbleches (103) anliegt.

4. Vorrichtung nach einem der vorhergehenden Ansprüche, bei der das Katalysatorsubstrat (101) einen Wabenkörper aus einem metallischen oder einem keramischen Material darstellt, der mit einem Washcoat versehen ist.

5. Vorrichtung nach einem der Ansprüche 1 bis 3, bei der das Katalysatorsubstrat (101) ein gewickeltes Katalysatorsubstrat ist.

6. Vorrichtung nach Anspruch 5, bei der das gewickelte Katalysatorsubstrat mit zwei oder mehreren Beschichtungsmaterialien versehen ist, wobei die verwendeten Beschichtungsmaterialien unterschiedliche Porösitäten aufweisen.

7. Vorrichtung nach einem der vorhergehenden Ansprüche, bei der zwischen den Gasleitblechen und dem Katalysatorsubstrat jeweils eine Trägerdichtung (110) angeordnet ist.

8. Vorrichtung nach Anspruch 7, bei der die Trägerdichtung (110) einen Ring aus Drahtgewebe umfasst.

9. Vorrichtung nach Anspruch 7, bei der die Trägerdichtung (110) aus einem elastischen Material besteht.

10. Verfahren zur Herstellung einer Vorrichtung gemäß einem der Ansprüche 1 bis 9, indem das Katalysatorsubstrat (101) zwischen dem einlassseitigen (102) und dem auslassseitigen Gasleitblech (103) formschlüssig angeordnet wird, die Gasleitbleche (102, 103) mit der Außenwand (104) verbunden werden, Gasaustrittsöffnungen (108) in das auslassseitige Gasleitblech (103) eingelassen werden, wobei der ausgesparte Teil (109) des auslassseitigen Gasleitbleches (103) gebördelt wird, um das Katalysatorsubstrat (101) zu fixieren.

11. Verfahren nach Anspruch 10, bei dem Gasleitbleche (102, 103) und Außenwand (104) verbunden werden, indem Gasleitbleche (102, 103) mit der Außenwand (104) verschweißt werden.

12. Verfahren nach Anspruch 10 oder 11, bei dem die Gaseintrittsöffnungen (108) in das auslassseitige Gasleitblech (103) eingelassen werden, indem jede Gaseintrittsöffnung (108) durch einen halbkreisförmigen Schnitt in das auslassseitige Gasleitblech (103) gesetzt wird, wobei anschließend der entstandener Halbkreis gebördelt wird, um das Katalysatorsubstrat zu fixieren.

13. Verfahren nach Anspruch 12, bei dem der Schnitt durch eine Stanze, eine Fräse oder eine Säge gesetzt wird.

14. Verfahren nach einem der vorhergehenden Ansprüche 10 bis 12, bei dem vor dem Anordnen des Katalysatorsubstrates (101) zwischen den Gasleitblechen, Trägerdichtungen (110) zwischen Katalysatorsubstrat (101) und Gasleitblechen (102, 103) angeordnet werden.

15. Verwendung einer Vorrichtung gemäß einem der Ansprüche 1 bis 9 für einen Dreiwegekatalysator, einen Dieseloxidationskatalysator, einen NOₓ-Speicherkatalysator oder für eine Selektive Katalytische Reduktion.

16. Verfahren zur Behandlung von Abgasen aus Kraftfahrzeugen unter Verwendung einer Vorrichtung gemäß einem der Ansprüche 1 bis 9, bei dem ein Abgasstrom (106) durch das einlassseitige Gasleitblech (102) in den ersten Hohlraum (105) der Vorrichtung geleitet wird, von dort durch das Katalysatorsubstrat (101) hindurchtritt, in den zweiten Hohlraum (107) der Vorrichtung geleitet wird und durch die Gasaustrittsöffnungen (108) aus der Vorrichtung herausgeführt wird.

17. Verfahren nach Anspruch 16, bei dem das Verfahren in umgekehrter Strömungsrichtung durchgeführt wird.

## Claims

1. Device for the catalytic treatment of exhaust gases of motor vehicles comprising a catalyst substrate (101) designed as a hollow cylinder, an inlet-side (102) and an outlet-side (103) gas baffle and an outer wall (104), wherein the gas baffles (102, 103) enclose the catalyst substrate (101) and the outlet-side gas baffle (103) and the catalyst substrate (101) form a first cavity (105) into which an exhaust-gas stream (106) can be fed, passing through the catalyst substrate (101) and entering a second cavity (107) which is surrounded by outer wall (104), gas baffles (102, 103) and catalyst substrate (101), wherein the outlet-side gas baffle (103) has gas vents (108), and wherein the recessed part (109) of the outlet-side gas baffle (103) is beaded, with the result that the catalyst substrate (101) is fixed.

2. Device according to claim 1, in which the catalyst substrate (101) is rimmed by bending the inlet-side gas baffle (102), with the result that there is a guide (111) in the inlet-side gas baffle (102) into which the catalyst substrate (101) is fitted in positive-locking manner.

3. Device according to claim 1 or 2, in which the catalyst substrate (101) is rimmed by bending the outlet-side gas baffle (103), with the result that the inside of the catalyst substrate (101) designed as a hollow cylinder abuts in positive-locking manner against a bend (112) of the outlet-side gas baffle (103).

4. Device according to one of the previous claims, in which the catalyst substrate (101) represents a honeycomb body made of a metal or a ceramic material which is provided with a washcoat.

5. Device according to one of claims 1 to 3, in which the catalyst substrate (101) is a wound catalyst substrate.

6. Device according to claim 5, in which the wound catalyst substrate is provided with two or more coating materials, wherein the coating materials used have different porosities.

7. Device according to one of the previous claims, in which a support seal (110) is arranged in each case between the gas baffles and the catalyst substrate.

8. Device according to claim 7, in which the support seal (110) comprises a ring of wire cloth.

9. Device according to claim 7, in which the support seal (110) consists of an elastic material.

10. Process for the production of a device according to one of claims 1 to 9, by arranging the catalyst substrate (101) in positive-locking manner between the inlet-side (102) and outlet-side gas baffle (103), connecting the gas baffles (102, 103) to the outer wall (104), letting gas vents (108) into the outlet-side gas baffle (103), wherein the recessed part (109) of the outlet-side gas baffle (103) is beaded in order to fix the catalyst substrate (101).

11. Process according to claim 10, in which gas baffles (102, 103) and outer wall (104) are connected by welding gas baffles (102, 103) to the outer wall (104).

12. Process according to claim 10 or 11, in which the gas inlet openings (108) are let into the outlet-side gas baffle (103) by setting each gas inlet opening (108) into the outlet-side gas baffle (103) through a semi-circular cut, wherein the resultant semi-circle is then beaded in order to fix the catalyst substrate.

13. Process according to claim 12, in which the cut is set by a stamping machine, a milling machine or a saw.

14. Process according to one of the previous claims 10 to 12, in which, before the catalyst substrate (101) is arranged between the gas baffles, support seals (110) are arranged between catalyst substrate (101) and gas baffles (102, 103).

15. Use of a device according one of claims 1 to 9 for a three-way catalyst, a diesel oxidation catalyst, an NOₓ storage catalyst or for a selective catalytic reduction.

16. Method for the treatment of exhaust gases of motor vehicles using a device according to one of claims 1 to 9, in which an exhaust-gas stream (106) is conducted through the inlet-side gas baffle (102) into the first cavity (105) of the device, from where it passes through the catalyst substrate (101), is conducted into the second cavity (107) of the device and removed from the device through the gas vents (108).

17. Method according to claim 16, in which the method is carried out in the reverse direction of flow.

## Revendications

1. Dispositif pour le traitement catalytique de gaz d'échappement de véhicules automobiles comprenant un substrat de catalyseur (101) réalisé en tant que cylindre creux, une tôle de guidage de gaz (102) côté entrée et une tôle de guidage de gaz (103) côté sortie ainsi qu'une paroi externe (104), dans lequel les tôles de guidage de gaz (102, 103) bordent le substrat de catalyseur (101) et la tôle de guidage de gaz (103) côté sortie et le substrat de catalyseur (101) forment un premier espace creux (105), dans lequel un courant de gaz d'échappement (106) peut être introduit, lequel passe à travers le substrat de catalyseur (101) et parvient dans un second espace creux (107), qui est entouré par la paroi externe (104), les tôles de guidage de gaz (102, 103) et le substrat de catalyseur (101), dans lequel la tôle de guidage de gaz (103) côté sortie dispose d'ouvertures de sortie de gaz (108) et dans lequel la partie évidée (109) de la tôle de guidage de gaz (103) côté sortie est repliée de sorte que le substrat de catalyseur (101) est fixé.

2. Dispositif selon la revendication 1, dans lequel le substrat de catalyseur (101) est bordé en ce que la tôle de guidage de gaz (102) côté entrée est repliée, de sorte qu'un guide (111) est présent dans la tôle de guidage de gaz (102) côté entrée, dans lequel le substrat de catalyseur (101) est adapté par fermeture géométrique.

3. Dispositif selon la revendication 1 ou 2, dans lequel le substrat de catalyseur (101) est bordé en ce que la tôle de guidage de gaz (103) côté sortie est repliée, de sorte que le côté interne du substrat de catalyseur (101) réalisé en tant que cylindre creux repose par fermeture géométrique contre un pli (112) de la tôle de guidage de gaz (103) côté sortie.

4. Dispositif selon l'une quelconque des revendications précédentes, dans lequel le substrat de catalyseur (101) représente un corps alvéolé en un matériau métallique ou céramique qui est pourvu d'un encollage.

5. Dispositif selon l'une quelconque des revendications 1 à 3, dans lequel le substrat de catalyseur (101) est un substrat de catalyseur enroulé.

6. Dispositif selon la revendication 5, dans lequel le substrat de catalyseur enroulé est pourvu de deux matériaux de revêtement ou plus, les matériaux de revêtement utilisés présentant différentes porosités.

7. Dispositif selon l'une quelconque des revendications précédentes, dans lequel un joint de support (110) est à chaque fois disposé entre les tôles de guidage de gaz et le substrat de catalyseur.

8. Dispositif selon la revendication 7, dans lequel le joint de support (110) comprend un anneau en tissu métallique.

9. Dispositif selon la revendication 7, dans lequel le joint de support (110) se compose d'un matériau élastique.

10. Procédé pour la fabrication d'un dispositif selon l'une quelconque des revendications 1 à 9, en ce que le substrat de catalyseur (101) est disposé par fermeture géométrique entre la tôle de guidage de gaz (102) côté entrée et la tôle de guidage de gaz (103) côté sortie, les tôles de guidage de gaz (102, 103) sont reliées à la paroi externe (104), des ouvertures de sortie de gaz (108) sont pratiquées dans la tôle de guidage de gaz (103) côté sortie, dans lequel la partie évidée (109) de la tôle de guidage de gaz (103) côté sortie est repliée afin de fixer le substrat de catalyseur (101).

11. Procédé selon la revendication 10, dans lequel les tôles de guidage de gaz (102, 103) et la paroi externe (104) sont reliées en ce que les tôles de guidage de gaz (102, 103) sont soudées à la paroi externe (104).

12. Procédé selon la revendication 10 ou 11, dans lequel les ouvertures d'entrée de gaz (108) sont pratiquées dans la tôle de guidage de gaz (103) côté sortie en ce que chaque ouverture d'entrée de gaz (108) est placée par une découpe semi-circulaire dans la tôle de guidage de gaz (103) côté sortie, le demi-cercle résultant étant ensuite replié afin de fixer le substrat de catalyseur.

13. Procédé selon la revendication 12, dans lequel la découpe est réalisée par une estampe, une fraise ou une scie.

14. Procédé selon l'une quelconque des revendications précédentes 10 à 12, dans lequel des joints de support (110) sont disposés entre le substrat de catalyseur (101) et les tôles de guidage de gaz (102, 103) avant la disposition du substrat de catalyseur (101) entre les tôles de guidage de gaz.

15. Utilisation d'un dispositif selon l'une quelconque des revendications 1 à 9 pour un catalyseur trois voies, un catalyseur d'oxydation diesel, un catalyseur à accumulation de NOₓ ou pour une réduction catalytique sélective.

16. Procédé pour le traitement de gaz d'échappement provenant de véhicules automobiles en utilisant un dispositif selon l'une quelconque des revendications 1 à 9, dans lequel un courant de gaz d'échappement (106) est guidé à travers la tôle de guidage de gaz (102) côté entrée dans le premier espace creux (105) du dispositif, passe de là à travers le substrat de catalyseur (101), est guidé dans le second espace creux (107) du dispositif et est évacué du dispositif à travers les ouvertures de sortie de gaz (108).

17. Procédé selon la revendication 16, dans lequel le procédé est réalisé en sens inverse de l'écoulement.
